# FASCICULE DE BREVET EUROPEEN

(11) **EP 1 899 219 B1**
(45) Date de publication et mention de la délivrance du brevet: **15.02.2012**
(21) Numéro de dépôt: 06764599.4
(22) Date de dépôt: 11.05.2006
(51) Int. Cl.: B63B 27/34, F16L 1/14

(54) **DISPOSITIF DE TRANSFERT DE FLUIDE ENTRE DEUX SUPPORTS FLOTTANTS**
VORRICHTUNG ZUR ÜBERGABE VON FLUIDEN ZWISCHEN ZWEI SCHWEMMENDEN PLATTFORMEN
DEVICE FOR TRANSFER OF FLUIDS BETWEEN TWO FLOATING SUPPORTS

(30) Priorité: 13.05.2005 FR 0504848
(43) Date de publication de la demande: 19.03.2008
(73) Titulaire: SAIPEM S.A., 78180 Montigny-le-Bretonneux (FR)
(72) Inventeur: PIONETTI, François-Régis, F-50450 La Baleine (FR); RIVOAL, Midir, F-05700 Sigottier (FR)
(74) Mandataire: Domange, Maxime
(86) Numéro de dépôt international: PCT/FR2006/001053
(87) Numéro de publication internationale: WO 2006/120351

(56) Documents cités:
- WO-A-01/83291
- WO-A-01/96771
- WO-A-99/62762
- WO-A-2004/068014
- WO-A-2005/090152
- US-A1- 2001 031 174
- US-B1- 6 558 215
- KELLER DIDIER ET AL: "HALF YEAR RESULTS 2004 - ANALYSTS PRESENTATIONS AMSTERDAM / LONDON" [Online] 31 août 2004 (2004-08-31), IHC CALAND NL , AMSTERDAM, NL / LONDON, GB , XP002361808 Extrait de l'Internet: URL:http://www.ihccaland.nl/HTML/Financial %20data/Analysts%20Presentations%20August% 2031,%202004.pdf> [extrait le 2006-01-04] page 1 page 30 - page 31
- SINGLE BUOY MOORINGS INC: "GRAVITY ACTUATED PIPE (GAP)" DEEP WATER TECHNILOGY, [Online] XP002361806 MARLY, CH; MONACO, MC Extrait de l'Internet: URL:http://www.singlebuoy.com/HTML/PDF/SBM _GAP.pdf> [extrait le 2006-01-04]

## Description

La présente invention concerne un dispositif de transfert de fluide entre deux supports flottants ancrés au fond de la mer comportant une conduite sous-marine rigide centrale installée en subsurface dont les extrémités sont reliées chacune respectivement à un des deux dits supports par l'intermédiaire d'une conduite flexible. La présente invention concerne en outre un procédé d'installation en mer d'un tel dispositif.

Plus particulièrement, la présente invention concerne le domaine connu des liaisons à grande distance installées en subsurface du type comportant une conduite sous-marine reliant deux supports flottants ancrés à la surface de la mer, ancrés.

Dès que la profondeur d'eau devient importante, l'exploitation des champs de production, notamment des champs pétroliers, s'effectue en général à partir d'un support flottant Ce support flottant comporte en général des moyens d'ancrage pour rester en position malgré les effets des courants, des vents et de la houle. Il comporte aussi en général des moyens de stockage et de traitement du pétrole, ainsi que des moyens de déchargement vers des pétroliers enleveurs. L'appellation de ces supports flottants est le terme anglo-saxon "Floating Production Storage & Offloading" (signifiant "support flottant de stockage, de production et de déchargement,") abrégé par "FPSO".

Les moyens de déchargement sont en général constitués par une bouée ancrée loin du FPSO, de manière à pouvoir accueillir des pétroliers de fort tonnage, pouvant mesurer de 250 à 300 m de longueur pour un tonnage port en lourd de 300 à 450.000 TPL, voire plus. Ces bouées de déchargement sont connues sous le nom de SPM (Single Point Mooring), ou « point d'ancrage unique » et sont en général ancrées sur le fond de la mer par une multitude de lignes, en général 4, 6 ou 8 lignes, reliées à des points d'ancrage situés au fond de la mer, lesdits points d'ancrage étant soit des ancres, soit des corps morts, soit encore des ancres à succion.

Pour assurer la sécurité des manoeuvres des pétroliers enleveurs, il est d'usage d'installer la bouée d'export loin du FPSO, la distance pouvant atteindre 1500 à 2000 m dans le cas de super-pétroliers enleveurs.

Lorsque la profondeur d'eau est faible, par exemple quelques centaines de mètres, la conduite de liaison entre le FPSO et la bouée est installée de manière conventionnelle sur le fond de la mer, une liaison fond-surface étant installée à chaque extrémité, du côté du FPSO, ainsi que du côté de la bouée.

Dans les grandes profondeurs d'eau, par exemple 1000 ou 2000 m voire plus, on cherche à éviter de descendre jusqu'au fond de la mer, puis à remonter en surface, car la surlongueur créée par la descente et la remontée de la conduite devient rédhibitoire par rapport à la distance horizontale entre les deux supports flottants, en termes de pertes de charge et de refroidissement du pétrole brut, le fond de la mer étant sensiblement à 4°C.

On préfère alors utiliser des liaisons dites de « subsurface », que l'on installe en général à une profondeur de 150 à 300 m, car à cette profondeur, la houle de surface n'a pratiquement plus d'effets dynamiques directs sur la conduite d'export, et de plus, les navires peuvent naviguer librement sans risques d'interférer avec lesdites liaisons de subsurface.

De nombreux systèmes ont été développés pour réaliser ces liaisons subsurfaces, certains utilisant des conduites flexibles très coûteuses, car en général de fort diamètre, d'autres utilisant des conduites en acier de forte épaisseur associées à des éléments de flottabilité.

Tous ces dispositifs doivent assurer un très haut niveau de fiabilité en raison des risques de pollution considérables au cas où la conduite viendrait à se rompre, la durée de vie recherchée pour de telles installations étant couramment d'au moins 20 ans, voire au moins 30 ans.

Ces dispositifs sont soumis à l'action directe de la houle et du courant, mais du fait qu'ils sont raccordés mécaniquement à deux supports flottants, ils sont sollicités aussi par les mouvements desdits supports flottants. Pour atteindre les durées de vie recherchées, les conduites d'export doivent ainsi résister aux phénomènes de fatigue au sein de la matière constituant lesdites conduites, lesdits phénomènes de fatigue les plus critiques étant causés par les mouvements quasi permanents desdits supports flottants.

En effet, le FPSO présente des surfaces considérables soumises à la houle, au vent et au courant et il en résulte des mouvements quasi-permanents, en termes de roulis, de tangage, de cavalement et de lacet, qui peuvent devenir extrêmes en cas de tempête. De plus, des phénomènes de fréquence propre de résonance ne manquent pas d'amplifier ces mouvements, et ainsi d'exciter la conduite d'export à laquelle est mécaniquement solidarisé ledit FPSO.

De même, la bouée de déchargement, bien qu'ayant des dimensions plus modestes que le FPSO, est, elle aussi, soumise à la houle et au courant et, bien qu'ancrée de manière extrêmement ferme, excite elle aussi ladite conduite d'export.

Pour réduire la tension engendrée par le poids de la conduite rigide et limiter la tension aux extrémités, des éléments de flottabilité conférant donc une flottaison positive, ont été mis en oeuvre pour créer une simple ou double vague (courbe en forme de chaînette) entre les deux supports flottants. Ces courbures confèrent à la conduite une surlongueur entre ses extrémités, permettant d'absorber les écarts de longueur dus au déplacement relatif des supports flottants.

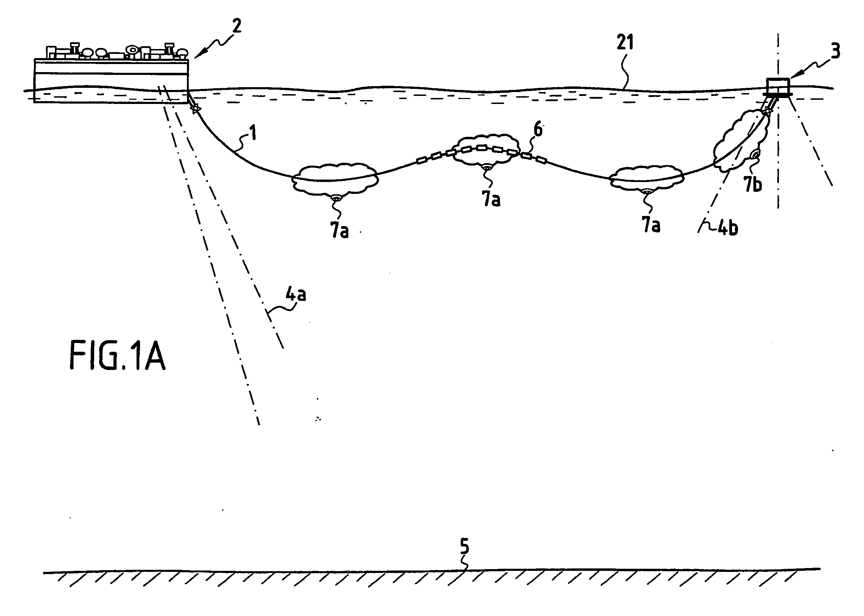

On connaît la disposition en double vague, dite en « W » symétrique (figure 1a) qui peut être réalisée à l'aide de conduites flexibles mais qui autorise aussi l'utilisation de conduites en acier de fort diamètre et de forte épaisseur. Dans ce dernier cas, des articulations flexibles étanches ou « flexjoints » sont en général installées à chacune des extrémités de manière à améliorer le découplage mécanique desdits supports flottants (FPSO et bouée) de ladite conduite d'export rigide de forte épaisseur. Cette disposition a été mise en oeuvre sur le champ de Girassol au large de l'Angola.

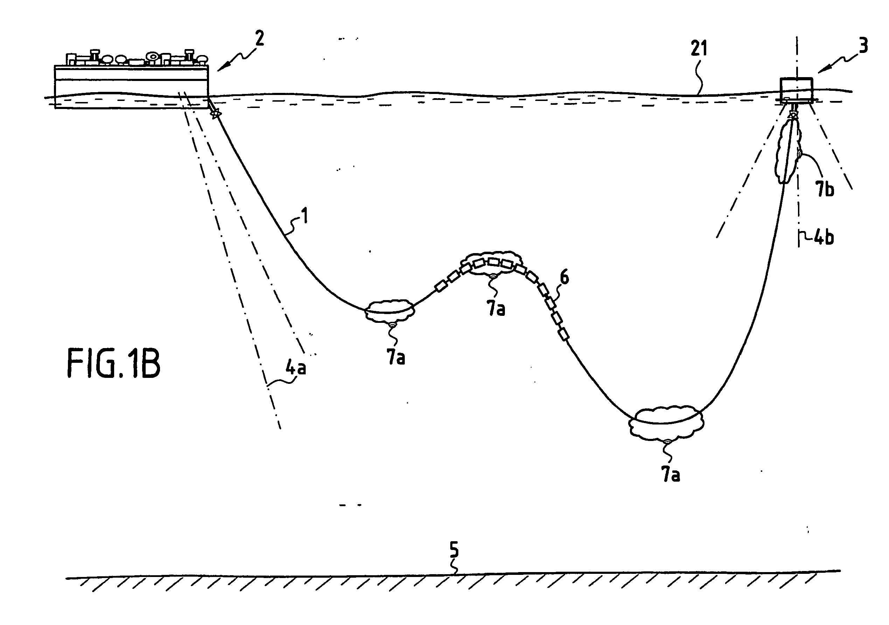

On connaît aussi la disposition dite en « W » asymétrique (figure 1b), dans laquelle le « V » du côté de la bouée de déchargement plonge beaucoup plus profondément Il en résulte un meilleur comportement de la conduite acier de fort diamètre et de forte épaisseur, au niveau de la fatigue engendrée par les mouvements quasi-permanents de la bouée de déchargement, lesquels excitent l'ensemble de la chaînette, et principalement la zone de courbure minimale située dans la zone du point de tangence horizontale. Dans cette configuration, l'extrémité de la conduite côté bouée doit être renforcée par une augmentation graduelle de l'épaisseur de la conduite et dans certains cas par l'interposition d'une portion de conduite conique d'épaisseur continûment variable dont la longueur peut atteindre et dépasser 15-20 m.

Le principal inconvénient de cette configuration est l'augmentation du poids de la conduite, et donc de la tension au niveau de la bouée de déchargement, ce qui nécessite un surcroît de flottabilité et engendre ainsi un surcoût important.

On connaît la disposition dite en « W » symétrique avec une bouée intermédiaire submergée, qui permet ainsi de découpler radicalement l'extrémité de la conduite sous-marine des mouvements engendrés par la bouée de déchargement, la liaison entre bouée submergée et bouée de déchargement étant assurée par une conduite flexible.

Cette configuration nécessite deux systèmes d'ancrage associés respectivement à la bouée de déchargement et à la bouée intermédiaire submergée, ce qui engendre des surcoûts considérables en raison de la multiplication du nombre de points d'ancrage et de la longueur de lignes d'ancrage surtout si la profondeur d'eau atteint et dépasse 2000 à 3000 m voire plus.

On connaît la disposition dite en chaînette simple décrite dans WO01/83291 qui consiste à installer une conduite plongeant profondément à partir du FPSO, à savoir dessous la zone de turbulence, et remontant directement sur la bouée de déchargement par des conduites flexibles aux extrémités de la conduite en acier. Cette alternative est la version la plus simple et présente un bon comportement vis-à-vis de la fatigue, mais elle nécessite quand même la mise en oeuvre de pièces forgées renforcées aux extrémités, principalement du côté de la bouée de déchargement. De plus la chaînette descendant très profondément, il en résulte une tension considérable aux extrémités. Si cette augmentation de tension ne pose pas de problème particulier au niveau du FPSO, en raison de la taille du support flottant, par contre la flottabilité de la bouée de déchargement doit être augmentée dans de grandes proportions et la résistance de la structure doit être considérablement renforcée.

Dans une variante décrite dans WO01/83291, la liaison avec le FPSO est réalisée par l'intermédiaire d'une portion de conduite flexible, la tension de la chaînette simple étant alors reprise par une chaîne reliant l'extrémité de la conduite rigide d'export audit FPSO. Dans cette dernière configuration comme pour les précédentes configurations en « W », les courbures de la conduite rigide sont importantes d'une part, et d'autre part les mouvements relatifs des supports flottants restent principalement absorbés par les variations de courbure de la conduite en acier, et ce dans les zones de courbure maximale, ces deux phénomènes étant source de fatigue et de diminution de durée de vie des installations, comme explicité ci-après. En outre, ces configurations sont difficiles à installer. D'autres inconvénients de ces différentes configurations sont exposés dans la description détaillée en liaison avec les figures 1a à 1d, ci-après.

De nombreux essais réalisés sur modèles numériques et sur maquettes, ainsi que des observations sur des sites existants, tel le champ de Girassol en Angola ou dans le Golfe du Mexique, ont montré que les phénomènes de fatigue dans tous ces systèmes doivent être cumulés dans des configurations extrêmement aléatoires, ce qui, pour garantir un très haut niveau de sûreté de fonctionnement, nécessite d'envisager des objectifs de durée de vie théoriques en fatigue beaucoup plus élevés, conduisant à des facteurs de sécurité 3 à 5 fois, voire 10 fois plus élevés par rapport à la durée de vie recherchée, laquelle atteint et dépasse couramment 30 ans.

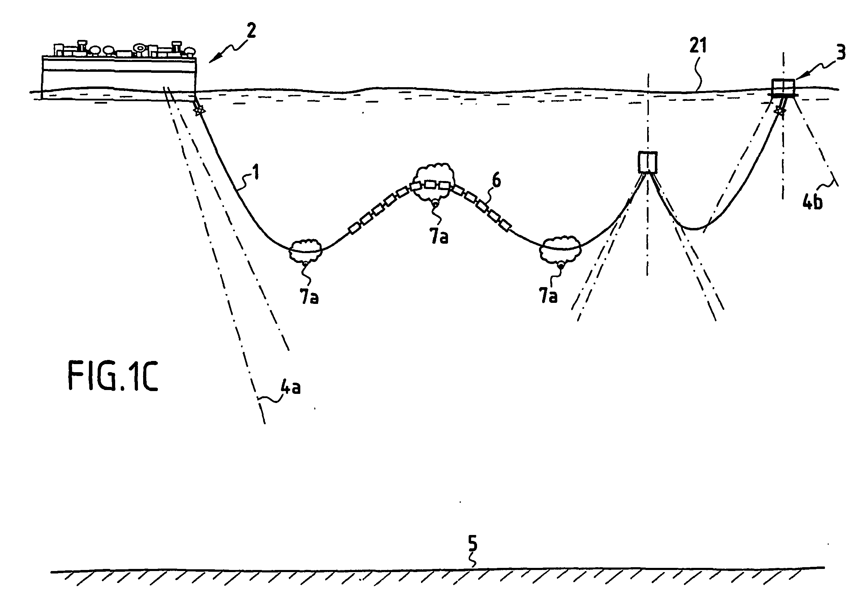

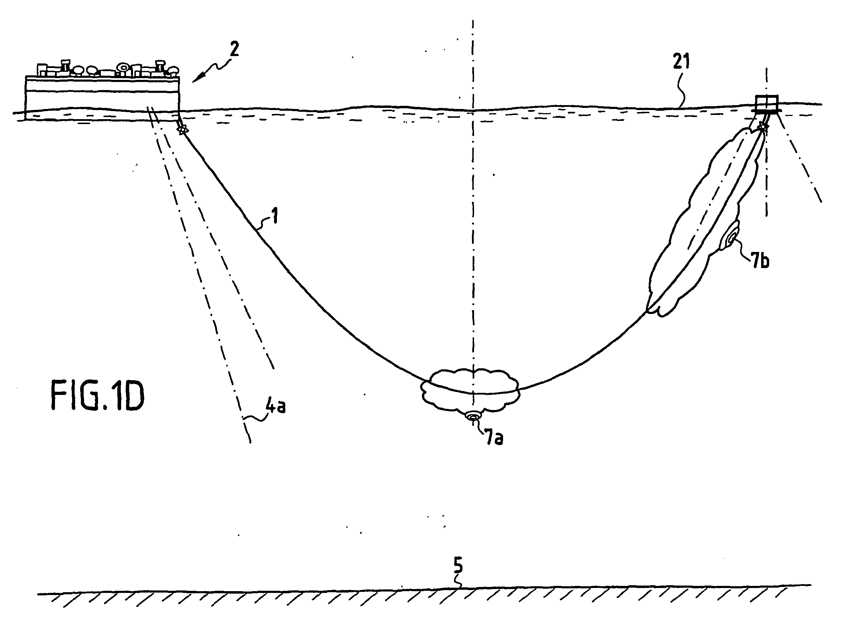

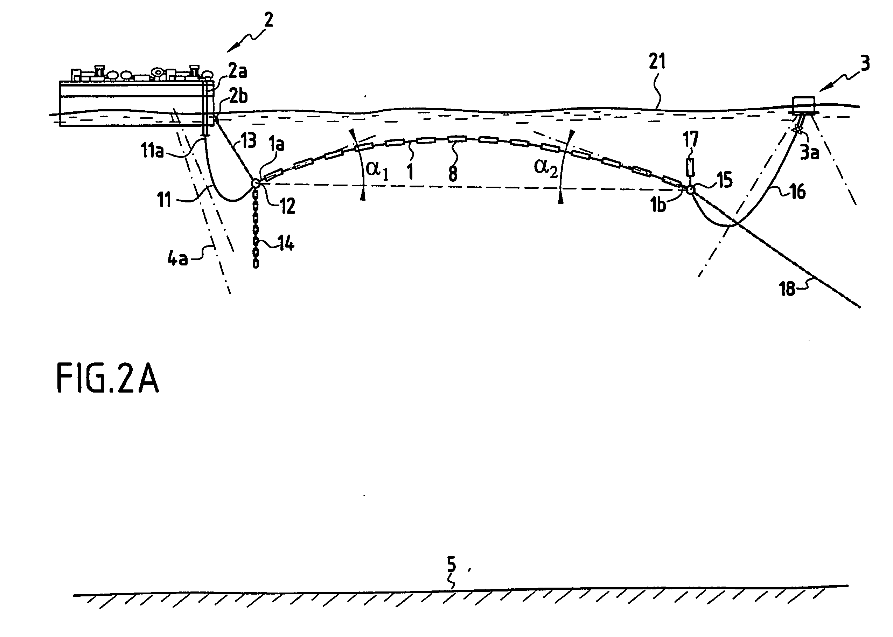

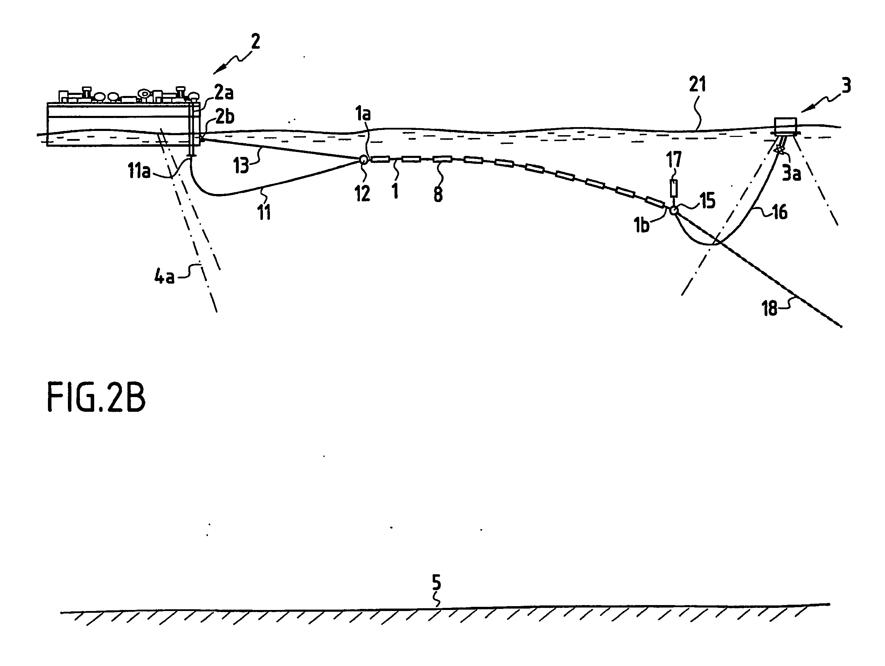

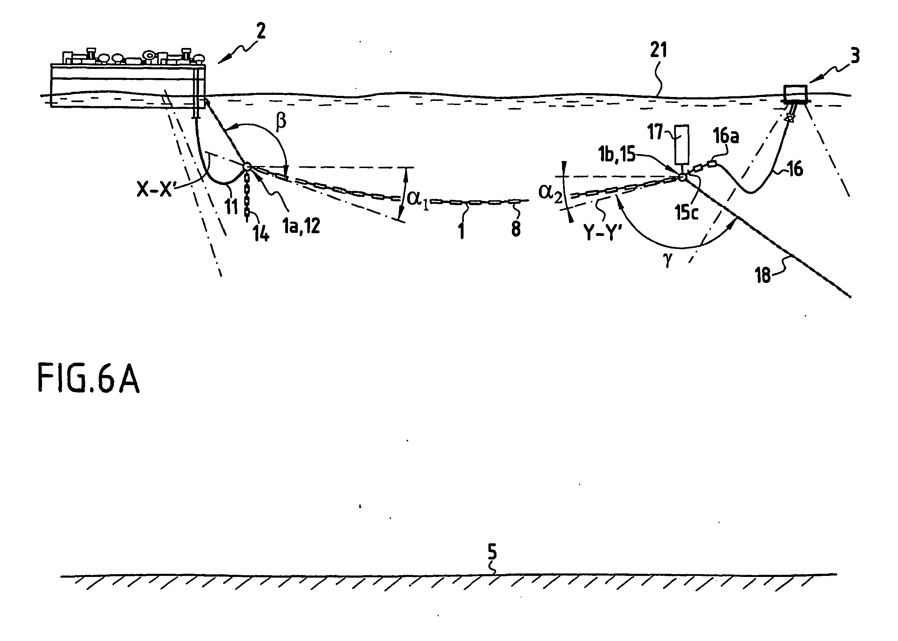

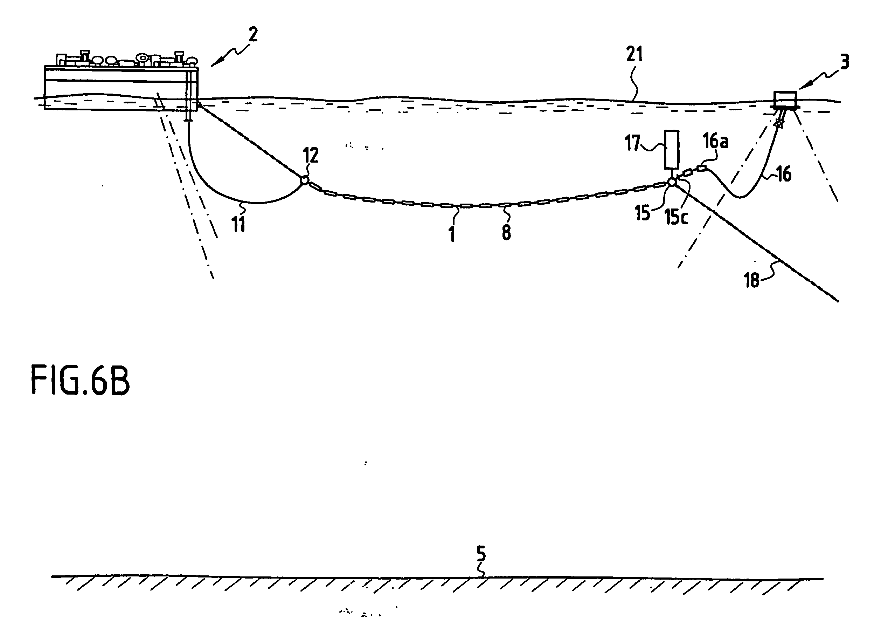

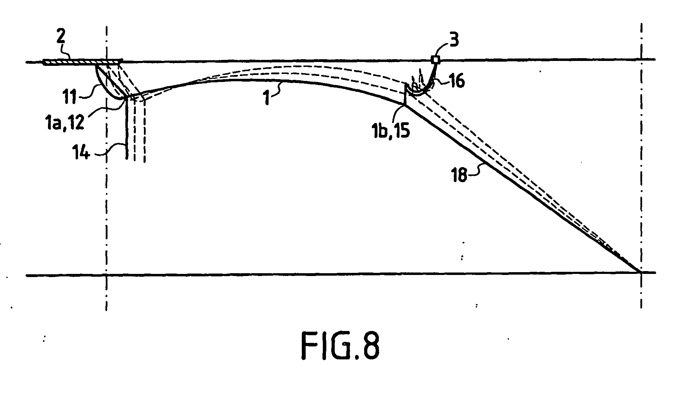

WO 01/96771, qui est considéré comme représentant l'art antérieure le plus proche et montre toutes les caractéristiques du préambule de la revendication indépendente 1 décrit une conduite de transport de fluide en sub-surface entre deux supports flottants avec une conduite rigide dont les 2 extrémités sont supportées par des bouées 3 et 4 qui coopèrent chacune avec des moyens de lestage ou corps morts suspendus 32, 33 (fig.8) ou qui sont ancrés au fond de la mer par des liens de tensionnement 18, 19 (fig.1 et 6). WO 01/96771 décrit donc un assemblage, soit du type ancré au sol (fig. 1, 2), soit du type libre avec corps mort suspendu (fig.8, 8b).

Ce système est alors soit trop raide (dans le cas de l'ancrage au sol des 2 extrémités), soit trop souple (dans le cas de la suspension d'un corps mort à chaque extrémité). Il en résulte que sous l'effet de la houle ou des courants de travers, l'installation est soit sujette à des phénomènes de fatigue, soit trop instable. Au total, le comportement de cette installation se rapproche des installations à configuration en W de la technique antérieure.

WO 99/62762 décrit lui aussi une installation symétrique dans laquelle en outre la conduite de transport de fluide rigide est positionnée dans un plan horizontal, donc en quasi-équilibre de flottabilité, ce qui est également préjudiciable pour résister au phénomène de fatigue en raison des instabilités sous l'effet de la houle et des courants.

WO 2005/090152 décrit de manière spéculative plusieurs systèmes d'installation dans lesquels d'une part là encore la conduite centrale rigide est positionnée dans un plan horizontal, et d'autre part, les ancrages aux extrémités de ladite conduite centrale rigide sont quasiment verticaux et n'apportent donc pratiquement aucune stabilité, tant verticale que transversale, ce qui rend ladite conduite rigide extrêmement sensible au phénomène de fatigue engendré par la houle et les courants de travers.

Ainsi, le problème est de réaliser une conduite d'export installée en subsurface, reliant deux supports flottants et présentant une résistance accrue aux phénomènes de fatigue engendrés principalement par les mouvements desdits supports flottants, tout en restant d'un coût modéré et présentant une grande simplicité d'installation.

Pour ce faire, la présente invention fournit un dispositif de transfert de fluide entre deux supports flottants ancrés au fond de la mer comportant une conduite sous-marine rigide centrale installée en subsurface dont les extrémités sont reliées chacune respectivement à un des deux dits supports par l'intermédiaire d'une conduite flexible, dans lequel :
a) la partie courante de ladite conduite rigide centrale (1) comprend ou coopère avec des éléments de flottabilité (8) de sorte que la dite conduite rigide centrale adopte en état quasi-statique de repos une configuration en forme d'arche courbe, de préférence selon une courbe sensiblement en forme de chaînette telle que les angles (α₁, α₂) entre les demi-droites des axes (XX', YY') de la dite conduite rigide et les demi-droites horizontales à chacune de ses extrémités en direction de l'autre extrémité, sont en valeur absolue inférieurs à 20°, de préférence inférieurs à 15°, et
b) les dites conduites flexibles ont des longueurs et courbures, de sorte que les variations de courbure des dites conduites flexibles sont aptes à compenser les mouvements des supports flottants, et
c) ladite conduite rigide étant reliée à chaque extrémité par un lien de tensionnement, soit à un des deux dits supports flottants, soit au fond de la mer, lesdits liens de tensionnement étant reliés respectivement :
   ■ à une première extrémité, à un dit support flottant, ladite première extrémité comprenant ou coopérant avec des moyens de lestage, et
   ■ à sa seconde extrémité, au fond de la mer, ladite seconde extrémité comprenant ou coopérant avec des moyens de flottabilité additionnels.

De par sa configuration en forme d'arche courbe, on comprend que ladite conduite rigide ne se situe pas dans un plan horizontal entre ses 2 extrémités mais présente une courbure soit convexe si celle-ci est située au-dessus de ses dites extrémités, soit concave si celle-ci est située au-dessous, de ses dites extrémités.

Le maintien d'une courbure minimale de ladite conduite rigide permet d'éviter que ne se produise des instabilités de type vibratoire sous les effets de la houle et des courants, conduisant à des inversions de courbure, ce qui représenterait une forte variation de contrainte qui aurait alors pour effet de réduire considérablement la durée de vie de ladite conduite.

On comprend que ladite extrémité reliée par un dit lien de tensionnement à un des deux dits supports flottants n'est pas alors reliée au fond de la mer et comporte ou coopère avec des moyens de lestage et ne comporte pas ou ne coopère pas avec des moyens de flottabilité, et inversement, ladite extrémité reliée au fond de la mer par un dit lien de tensionnement, n'est pas reliée à l'autre dit support flottant par un lien de tensionnement et comprend ou coopère avec des moyens de flottabilité et ne comprend pas ou ne coopère pas avec des moyens de lestage.

Cette configuration asymétrique aux deux extrémités selon l'invention offre un bon compromis entre stabilité et souplesse de l'installation pour réduire les phénomènes de fatigue liés à la houle et aux courants pouvant affecter la durée de vie de l'installation. En particulier, un compromis optimal est obtenu par la variation de l'angle d'inclinaison des dits liens de tensionnement.

Plus particulièrement, l'angle α₁, α₂ entre l'axe de la dite conduite rigide à ses extrémités et l'horizontale est maintenu en valeur absolue entre 2 et 20°, de préférence 5 à 15°.

De préférence, ladite première extrémité de ladite conduite rigide est reliée au support flottant le plus stable des deux dits supports flottants.

On entend par support flottant « le plus stable » le support flottant le moins sujet à des mouvements en fonction de l'agitation de la mer liée à la houle ou aux courant, à savoir le support flottant le plus lourd et/ou le plus volumineux, et/ou celui le mieux ancré.

Les supports flottants selon l'invention peuvent être constitués par des plateformes d'exploitation de champs pétroliers ou des navires, bouées ou réservoirs flottants ancrés au fond de la mer.

Dans un mode particulièrement avantageux de réalisation de l'invention, les deux supports flottants sont constitués respectivement par un support flottant du type FPSO et une bouée de déchargement.

De préférence, ladite conduite rigide est reliée à sa dite première extrémité au dit support flottant de type FPSO.

Ainsi, pour la conduite rigide centrale, le rayon de courbure minimal de la courbe en état quasi-statique de repos (Rm) est supérieur à quatre fois, de préférence dix fois le rayon de courbure minimal ultime de la conduite, ledit rayon de courbure minimal ultime correspondant sensiblement à une contrainte maximale dans le matériau constitutif de la conduite, notamment de l'acier, sous le seul effet de la courbure, égale à 66% de la limite élastique dudit matériau.

Pour une conduite rigide standard en acier de diamètre d'environ 500 mm Rm, le rayon de courbure minimum de ladite conduite rigide centrale en forme de courbe de chaînette est de 750 m, de préférence 1 500 m.

Dans les configurations de la technique antérieure, les conduites rigides en acier présentent des courbures importantes et les variations de distance entre les supports flottants sont compensées par les variations de courbure de la conduite rigide, dans la zone de courbure maximale, entraînant donc des variations de contrainte importantes, la combinaison de ces deux phénomènes se traduisant par une diminution radicale de la durée de vie des dites conduites rigides comme rappelé ci-dessus.

Ainsi, dans le cas due la configuration en W, les rayons de courbure minimum sont de l'ordre de 1.2 à 2 fois la valeur du rayon de courbure minimum ultime. Il serait possible théoriquement d'augmenter ces valeurs, mais alors, les excursions relatives des deux supports flottants l'un par rapport à l'autre s'en trouveraient drastiquement réduits, ce qui va à l'encontre de l'objectif recherché. En effet, si dans les profondeurs d'eau réduites, il est possible d'ancrer par une méthode d'ancrage passif (non dynamique) de manière efficace les supports flottants pour limiter les excursions, dès que la profondeur d'eau atteint et dépasse 1000-1500 m, ces systèmes d'ancrage ne permettent pas d'obtenir mieux que +/- 4% de la hauteur d'eau, ce qui nécessite alors de la part de la conduite d'export, une grande capacité d'excursion. Ainsi, les configurations extrêmes dites « Near » et « Far » (où les supports flottants sont respectivement le plus et le moins éloigné l'un de l'autre) imposent à la conduite rigide en acier des variations d'effort très importants d'autant plus que la conduite a un plus grand diamètre réduisant de manière drastique la durée de vie en fatigue du système.

La configuration en chaînette unique plongeante est dans une situation de contrainte similaire car les deux supports flottants induisent des efforts non filtrés qui s'additionnent De plus au niveau des connections de surface, les tensions sont très élevées ce qui génère des problèmes de vibrations. Ces deux types d'excitations s'additionnant, la durée de vie du système en fatigue en est considérablement réduite.

Ainsi, pour donner de la capacité d'excursion, la solution proposée par l'art antérieur est, soit de multiplier le nombre d'arches, soit d'augmenter localement la courbure de la conduite. L'augmentation de ladite courbure a pour effet d'augmenter localement la contrainte, et pour des petits déplacements des supports flottants, les variations de rayon de courbure engendrent des variations importantes de contrainte, ce qui réduit considérablement la durée de vie en fatigue.

La disposition selon la présente invention permet de diminuer considérablement la fatigue et donc d'augmenter d'autant la durée de vie de la conduite rigide, lesquelles sont conditionnées d'une part par la valeur de la contrainte et d'autre part par l'amplitude de la variation de la contrainte qu'elle subit. En effet, selon l'invention, en état quasi-statique de repos :
- d'une part la courbure de la conduite rigide est très faible (très grand rayon de courbure), et
- d'autre part l'amplitude de la variation dudit rayon de courbure, lors des excursions des supports flottants, est drastiquement réduite par rapport aux réalisations antérieures.

Un autre avantage de l'invention est de mettre en oeuvre une longueur de conduite rigide réduite par rapport aux conduites à fortes courbures de la technique antérieure, d'où il résulte des pertes de charges réduites et un coût diminué.

L'invention est en outre particulièrement avantageuse, notamment en ce qu'elle nécessite un minimum d'ancrage au fond de la mer et donc des coûts réduits, mais aussi il permet une installation en mer très aisée du dispositif selon l'invention, depuis un navire de pose, comme il sera explicité plus loin.

Dans un mode préféré de réalisation, les dits liens de tensionnement forment avec les axes XX', YY' de la dite conduite rigide à ses extrémités des angles (β, γ) aptes à varier et déplacer verticalement les extrémités de la dite conduite rigide, lorsque les dits supports flottants sont en mouvement et que la distance entre eux varie, les dits angles présentant des valeurs en état quasi-statique de repos, inférieures à 150°, de préférence inférieures à 100°.

Il se produit alors concomittament à ce mouvement rotatif des dits liens de tensionnement, un déplacement vertical des extrémités 1a, 1b de la dite conduite rigide. Ainsi, en cas de mouvement relatif des deux supports flottants, qu'ils s'écartent ou se rapprochent, les angles γ ou β entre les dits liens de tensionnement et les tangentes aux extrémités de la conduite peuvent varier et notamment, dans le cas où les supports flottants s'écartent l'un de l'autre, augmenter jusqu'à 180° (angle maximal) fournissant ainsi la surlongueur nécessaire pour que le dit mouvement ait un effet réduit sur les efforts de traction ou compression aux dites extrémités de la conduite rigide et donc un effet réduit sur la variation de la courbure de la dite conduite rigide et donc encore un effet réduit sur la variation de contrainte.

Les dits moyens de lestage et moyens de flottabilité aux extrémités de la conduite rigide facilitent considérablement la mise en oeuvre de l'invention, comme il sera explicité plus loin, puisque c'est grâce au réglage des dits moyens que l'on peut régler la forme de la courbure de la dite conduite rigide centrale dans la dernière étape du mode d'installation d'un dispositif selon l'invention

En pratique, la disposition selon l'invention permet d'avoir un rayon de courbure de la conduite acier de forte épaisseur, très élevé, c'est-à-dire supérieur à quatre fois, de préférence supérieur à dix fois le rayon de courbure minimal ultime de la conduite, ledit rayon de courbure minimal ultime correspondant sensiblement à une contrainte maximale dans le matériau sous le seul effet de la courbure, égale à 66% de la limite élastique dudit matériau.

On pourrait alléger la conduite acier de manière à compenser exactement son poids propre dans l'eau, pour obtenir une configuration rectiligne, c'est-à-dire un rayon de courbure infini, mais on préfère, de manière à éviter des phénomènes de vibrations dans les plans vertical, horizontal ou oblique, maintenir la courbe dans un plan vertical, avec une courbure soit convexe (flottabilité positive), soit concave (flottabilité négative).

De préférence, la profondeur à laquelle sont positionnées les extrémités de la conduite rigide initialement au repos, et les angles de la conduite à ses extrémités sont sensiblement identiques aux deux extrémités de la conduite rigide.

Dans un mode de réalisation préféré, les dites conduites flexibles sont reliées aux extrémités de la dite conduite rigide centrale par des articulations mécaniques flexibles, ces dernières étant reliées mécaniquement par un lien de tensionnement, respectivement au support flottant et au point d'ancrage situé au fond de la mer.

Les dites articulations mécaniques flexibles permettent que les mouvements des dits liens de tensionnement, supports flottants et conduites flexibles, puissent se faire sans modifier sensiblement les efforts de compression ou traction au niveau des dites extrémités par rapport à un état quasi-statique de repos, limitant ainsi les effets d'usure au niveau des points d'attache.

Dans un mode particulier de réalisation, une dite articulation mécanique flexible comprend:
- une tubulure rigide reliée à ses extrémités aux extrémités respectives des dites conduite rigide et conduite flexible, et
- un corps principal constituant une pièce forgée définissant
   - une surface externe sur laquelle sont accrochés les dits liens de tensionnement et le cas échéant des dits moyens de lestage ou dits moyens de flottabilité, et
   - une surface interne délimitant un passage vide traversé par la dite tubulure et,
- la dite surface interne du corps principal et la dite tubulure supportent une butée lamifiée comprenant des couches d'élastomère d'axe de révolution XX',YY' de préférence de type sphérique, assurant la liaison mécanique flexible entre le dit corps principal et la dite tubulure, de manière à autoriser des mouvements angulaires de la dite tubulure par rapport au corps principal dans un cône d'angle au sommet situé sensiblement sur ledit axe de révolution XX',YY' de la dite butée laminée, d'un angle au sommet δ de valeur maximale 15°.

Selon d'autres caractéristiques avantageuses :
- lesdits moyens de lestage sont constitués par une chaîne lourde suspendue au niveau de ladite première extrémité, et
- lesdits moyens de flottabilité sont constitués par une bouée à laquelle la dite seconde extrémité est suspendue.

Avantageusement encore, la conduite flexible assurant la liaison entre l'extrémité de la conduite rigide et le dit support flottant, de préférence la conduite flexible assurant la liaison avec un support flottant relié au fond de la mer par un dit lien de tensionnement, de préférence encore une bouée de déchargement, présente une configuration en S.

Ce mode de réalisation permet d'éviter que la conduite flexible ne vienne interférer avec le dit lien de tensionnement assurant l'ancrage de l'extrémité de la conduite rigide avec le fond de la mer.

Ce type de configuration dans laquelle la conduite flexible est disposée au-dessus de l'extrémité de la conduite rigide est plus facile à mettre en oeuvre lorsque la tubulure assurant la liaison entre l'extrémité de la conduite rigide centrale et la dite conduite flexible présente, du côté de la liaison flexible, une extrémité courbée vers le haut.

Selon une autre caractéristique avantageuse de la présente invention, ladite conduite rigide comprend des éléments de flottabilité, constitués par une mousse d'isolation thermique répartie tout le long et tout autour de la dite conduite, de préférence de manière sensiblement uniforme et continue pour assurer ainsi à la fois isolation thermique et flottabilité de la dite conduite rigide.

Selon une variante préférée de réalisation, ladite conduite rigide présente une courbure convexe vue depuis la surface de la mer. Il est également possible que la dite conduite rigide présente une courbure concave vue depuis la surface de la mer. Cependant, on préfère mettre en oeuvre une conduite rigide présentant une courbure convexe vue depuis la surface car, dans ce type de configuration, il apparaît que les variations de courbure de la conduite rigide, et donc les contraintes, sont moindres qu'en configuration concave, ce qui améliore d'autant la durée de vie de ladite conduite. Et, de plus, l'installation s'en trouve facilitée comme il sera expliqué plus avant dans la description détaillée.

La présente invention a également pour objet un procédé d'installation en mer d'un dispositif selon l'invention, depuis un navire de pose en surface, qui comprend les étapes successives suivantes :
1) on accroche au fond de la mer ou le cas échéant sur un premier support flottant, de préférence une bouée de déchargement, un dit lien de tensionnement,
2) on assemble et pose en mer la conduite rigide centrale à partir d'éléments unitaires de conduites comprenant ou coopérant avec des dits éléments de flottabilité, le premier élément unitaire de conduite ayant été accroché à l'extrémité du dit lien de tensionnement,
3) on accroche un autre dit lien de tensionnement à l'extrémité du dernier élément de conduite, puis à un second support flottant ou au fond de la mer, le cas échéant,
4) on installe les dits moyens de lestage et moyens de flottabilité aux extrémités de la conduite rigide, puis
5) on installe les dites conduites flexibles entre les supports flottants et lesdites première et seconde extrémités de la conduite rigide.

De préférence, dans le procédé selon l'invention :
- à l'étape 1), on accroche ledit lien de tensionnement au fond de la mer du côté dudit support flottant le moins stable, de préférence une bouée de déchargement et
- à l'étape 3), on accroche ledit autre lien de tensionnement à un dit support flottant le plus stable, de préférence du type FPSO.

D'autres caractéristiques et avantages de la présente invention apparaîtront à la lumière de la description détaillée qui va suivre, en préférence aux figures suivantes dans lesquelles :
- Les figures 1a et 1b sont des vues de côté d'un dispositif de liaison subsurface en configuration connue respectivement de « W » symétrique (figure 1a) et de « W » asymétrique (figure 1b), entre un FPSO et une bouée de déchargement, selon la technique antérieure.
- La figure 1c est une vue de côté d'un dispositif de liaison subsurface en configuration connue de « W » associé à une bouée sous-marine intermédiaire, entre un FPSO et une bouée de déchargement, selon la technique antérieure.
- La figure 1d est une vue de côté d'un dispositif de liaison subsurface en configuration connue de simple chaînette, entre un FPSO et une bouée de déchargement.
- La figure 2a est une vue de côté d'un dispositif de liaison subsurface selon l'invention, entre un FPSO et une bouée de déchargement, constitué d'une conduite rigide formant une arche flottante à courbure positive (convexe vue de la surface), reliée par l'intermédiaire d'articulations mécaniques flexibles à des conduites flexibles audit FPSO et à ladite bouée de déchargement à chaque extrémité, avec une chaîne lourde de lestage à l'extrémité de la conduite rigide du côté du FPSO.
- La figure 2b représente la configuration du dispositif de la figure 2a en l'absence de chaînes lourdes à l'extrémité de la conduite rigide.
- La figure 3 est une vue de côté relative à la figure 2a détaillant le raccordement de la conduite rigide de ladite liaison subsurface, à ladite bouée, ainsi que son ancrage.
- La figure 4 est une coupe en vue de côté de l'articulation mécanique flexible entre la conduite rigide et la conduite flexible du côté du FPSO.
- La figure 5 est une coupe en vue de côté de l'articulation mécanique flexible entre la dite conduite rigide centrale et la conduite flexible, du côté de la bouée de déchargement.
- La figure 6a représente une variante de la figure 2a dans laquelle l'arche formée par la conduite rigide centrale présente une flottabilité légèrement négative, donc une courbure négative (forme concave vue depuis la surface).
- La figure 6b représente la variante de la figure 6a sans moyen de lestage à l'extrémité de la conduite rigide centrale du côté du FPSO.
- La figure 7 représente une variante de la figure 2a, dans laquelle la conduite flexible vers la bouée de déchargement présente une configuration en S, au-dessus du lien de tensionnement assurant l'ancrage de l'extrémité de la conduite rigide au fond de la mer.
- La figure 8 représente la variation de l'inclinaison des liens de tensionnement d'amarrage 13 et d'ancrage 18 des extrémités 1a et 1b respectivement de la conduite centrale rigide 1, et la remontée ou descente desdites extrémités lors de mouvements relatifs des supports flottants 2 et 3.
- Les figures 9a à 9d représentent les diverses phases d'installation d'un dispositif de transfert selon l'invention.

Sur les figures 1a à 1d, on a illustré les diverses configurations de l'art antérieur dans lesquelles on a représenté une conduite d'export de pétrole brut 1 reliant un FPSO 2 et une bouée de déchargement 3 flottant en surface et ancrées respectivement par des lignes d'ancres 4a, 4b reliées à des points d'ancrage, non représentés, situés sur le fond de la mer 5, tels des ancres, des corps morts ou des ancres à succion.

Sur les figures 1a, 1b, 1c, la conduite d'export 1 est allégée localement par des éléments de flottabilité 6 de type mousse syntactique installés autour de la conduite rigide 1, de manière à inverser sa courbure, laquelle est alors, vue depuis la surface et en partant du FPSO ou de la bouée, successivement concave, puis convexe, puis enfin concave. Il existe ainsi dans ces trois configurations deux points d'inflexion, situés respectivement de part et d'autre de la zone centrale allégée. Sur ces trois figures ont été indiquées les zones 7a soumises à une fatigue importante, et les zones 7b nécessitant un renforcement local de la conduite. Ledit renfort est soit réalisé par une augmentation par palier de l'épaisseur de la paroi de la conduite, soit par l'utilisation de pièces de raccordement coniques pour obtenir une variation continue de l'épaisseur de ladite pièce de raccordement Ces pièces tubulaires coniques d'épaisseur variable sont très délicates à fabriquer, car leur longueur atteint et excède 12 à 15 m et leur coût, très élevé lorsqu'elles sont en acier à hautes performances, devient exorbitant lorsqu'elles doivent être réalisées en titane pour atteindre les objectifs de résistance et de tenue en fatigue.

Sur la figure 1d, la zone soumise à fatigue 7a se trouve au creux de la chaînette et la zone nécessitant un renfort 7b proche de la bouée de déchargement 3 doit être renforcée par une dite pièce de raccordement conique ou à épaisseur étagée.

Les mouvements relatifs des supports flottants l'un par rapport à l'autre sont absorbés par une variation de courbure de la conduite rigide dans les zones de courbure maximale, c'est à-dire respectivement aux deux points bas des chaînettes extrêmes à courbure concave et au niveau du point haut de la chaînette centrale à courbure convexe. Il en résulte des variations de contraintes importantes dans ces zones entre les positions au plus près et au plus loin desdits supports flottants, ce qui réduit considérablement la durée de vie de la conduite rigide d'export.

Sur la figure 2a, on a représenté en vue de côté la conduite d'export selon l'invention, reliant un FPSO 2 et une bouée de déchargement 3 constituée d'une conduite centrale rigide 1 en configuration d'arche simple à courbure convexe, en vue depuis la surface. La dite courbure convexe est obtenue par allègement de la conduite par des éléments de flottabilité 8 de manière discontinue. Toutefois, on réalise avantageusement une flottabilité avec une mousse disposée continûment autour de la conduite, jouant aussi le rôle d'isolation thermique, de manière à ce que la température du pétrole brut transféré garde une température aussi élevée que possible durant tout le parcours, donc une viscosité aussi faible que possible, ce qui permet d'optimiser le débit dans la conduite. Ainsi cette mousse d'isolation et de flottabilité sera avantageusement répartie tout le long .et autour de la conduite, de préférence de manière uniforme.

La première extrémité 1a de la conduite centrale d'export 1 est reliée, côté FPSO 2, à une première articulation mécanique 12, sur laquelle est connectée une première conduite flexible 11 aboutissant à son autre extrémité en 11a sur une conduite rigide 2a. solidaire du bordé dudit FPSO 2. Cette première conduite flexible 11 a de préférence un diamètre interne identique à celui de la conduite centrale d'export 1 et à celui de la tubulure 12c de ladite première articulation mécanique 12 comme il sera expliqué ci-après. Ladite première articulation mécanique 12 est reliée au FPSO 2 en un point d'accrochage 2b par l'intermédiaire d'un lien de tensionnement d'amarrage tel qu'une chaîne 13, de préférence un câble, en acier ou en matériau composite, et supporte un moyen de lestage constitué d'un tronçon de chaîne lourde 14, par exemple de 100 à 200 tonnes, ou d'un corps mort de poids similaire, pendant simplement à la verticale de son point d'attache sur ladite première articulation mécanique 12.

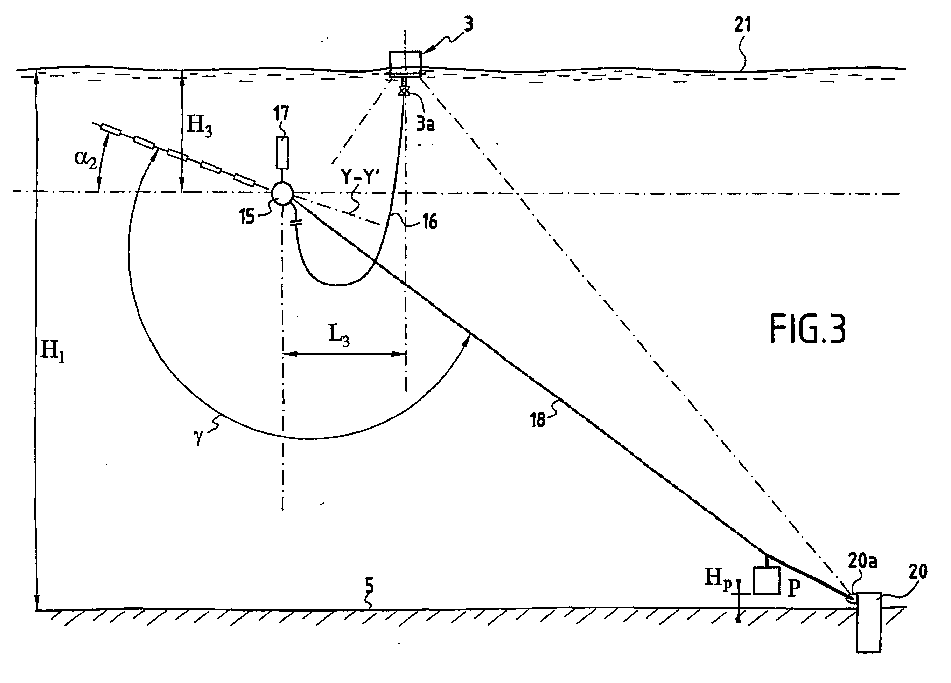

La seconde extrémité 1b de la conduite centrale rigide 1, côté bouée de déchargement 3, est reliée à une seconde articulation mécanique 15, elle-même reliée à une deuxième conduite flexible 16 connectée en 3a sur la bouée de déchargement 3. Un flotteur 17 compense le poids apparent de l'ensemble à l'extrémité de la conduite rigide 1 et un câble de tensionnement et d'ancrage 18 solidaire de la seconde articulation mécanique 15 est relié en 20a à une ancre à succion 20 au niveau du fond de la mer, comme montré sur la figure 3. En cas d'existence de courants transverses importants, deux câbles d'ancrage 18 seront avantageusement utilisés. Les deux ancres à succion 20 correspondantes seront alors positionnées de préférence symétriquement par rapport au plan vertical passant sensiblement par les axes du FPSO et de la bouée de déchargement.

Sur la figure 6a on a représenté une variante de l'invention dans laquelle la conduite rigide centrale d'export 1 est rendue légèrement pesante dans l'eau, par ajustement de la poussée verticale vers le haut créée par la flottabilité 8 répartie de préférence de manière continue tout le long de la conduite, et jouant simultanément le rôle d'isolation thermique, ce qui lui confère, vu de la surface, une courbure concave. Dans cette configuration, il convient alors de réduire le poids de la chaîne lourde 14, ou du corps mort équivalent, pour compenser la moindre flottabilité de la conduite rigide centrale d'export 1, et il convient en revanche d'augmenter de manière significative la flottabilité du flotteur 17 par rapport à la figure 2a.

Dans une version préférée de l'invention détaillée sur cette même figure 6a, la deuxième conduite flexible 16 est équipée de flotteurs 16a et l'extrémité de la tubulure 15c est courbée vers le haut, de manière à ce que ladite conduite flexible 16 ne vienne pas interférer avec le câble d'ancrage 18.

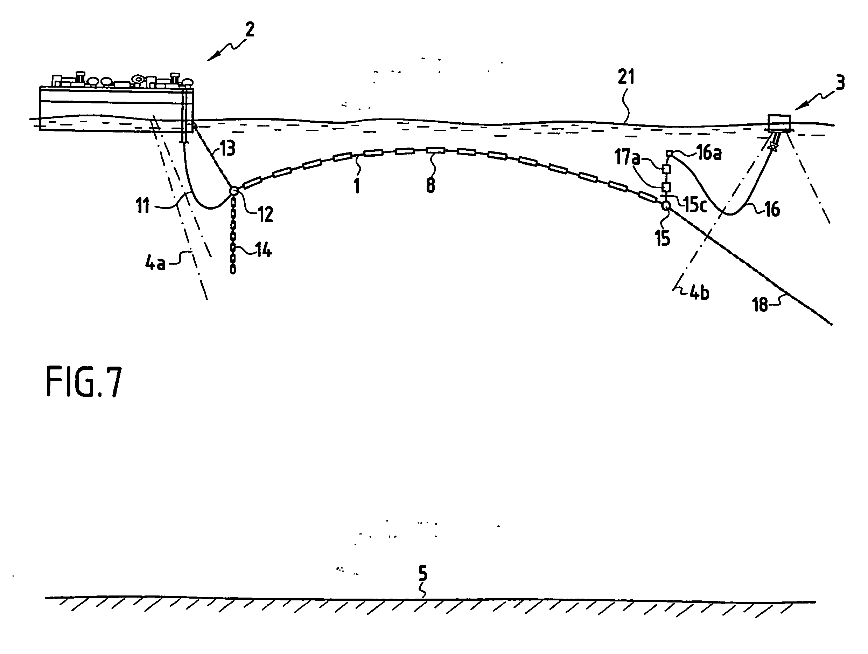

Dans la figure 7 on a représenté en vue de côté une conduite rigide centrale d'export à configuration convexe, en vue depuis la surface, dans laquelle la deuxième conduite flexible 16 est disposée verticalement au-dessus de la seconde articulation mécanique 15, la tubulure 15c devant être alors coudée vers le haut

Le flotteur 17 est ici intégré directement à ladite conduite flexible 16 en 17a, un flotteur complémentaire 16a submergé associé à des limiteurs de courbure non représentés, maintenant une courbure acceptable dans la partie haute de la chaînette de la dite conduite flexible 16.

Sur les figures 2a, 6a et 7, le poids de la chaîne lourde 14, la flottabilité du flotteur 17 sont réglés en fonction du poids linéaire de la conduite rigide 1 de sorte que la dite conduite rigide centrale 1 adopte en état quasi-statique de repos une configuration en forme d'arche, de préférence selon une courbe sensiblement en forme de chaînette telle que les angles α₁, α₂ entre les demi-droites des axes XX', YY' de la dite conduite rigide et les demi-droites horizontales à chacune de ses extrémités 1a, 1b en direction de l'autre extrémité 1b, 1a, sont en valeur absolue inférieurs à 20°, de préférence inférieurs à 15°. La chaîne lourde 14 et le flotteur 17 permettent de disposer les liens de tensionnement 13 et 18 selon un angle respectivement γ et β d'au plus 150°, de préférence au plus 100°, par rapport aux axes XX' et YY' des extrémités des conduites rigides centrales 1a et 1b respectives, et permettent ainsi d'absorber les mouvements relatifs des supports flottants 2 et 3 comme explicité ci-après.

Sur les figures 2b et 6b, on voit que l'absence d'une chaîne lourde 14 entraîne un quasi alignement du lien de tensionnement d'amarrage 13 à l'extrémité 1a de la conduite rigide, formant ainsi un angle d'environ 180° entre ledit lien de tensionnement et l'axe de la conduite rigide à cette extrémité 1a, de sorte que le déplacement relatif des supports flottants ne peut pas être absorbé par la variation de cet angle et entraîne nécessairement une variation importante de la courbure de la conduite, donc une variation importante des contraintes dans la conduite, ce qui réduit considérablement la durée de vie de ladite conduite.

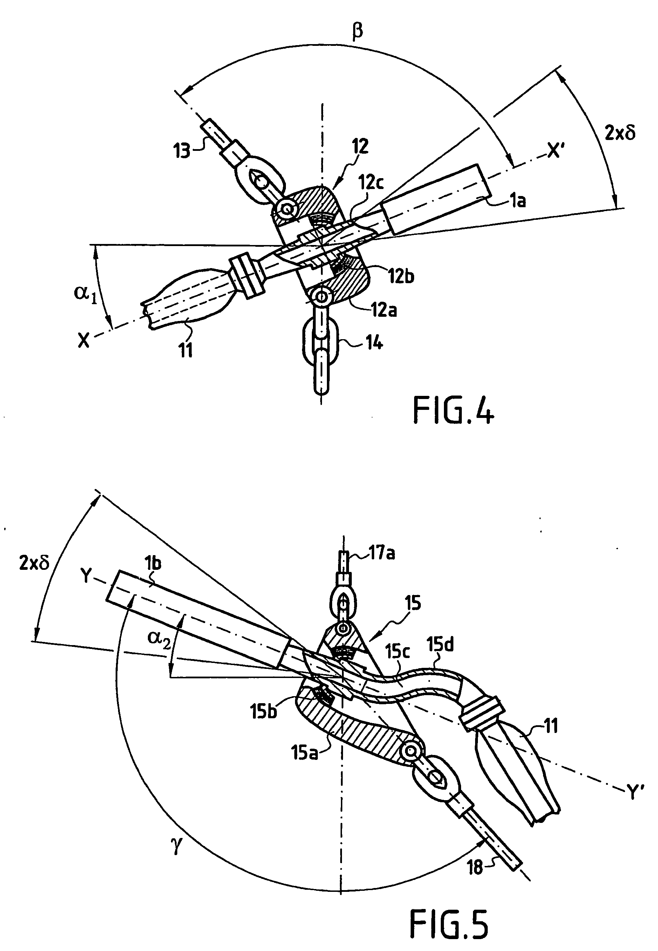

La figure 4 est une coupe en vue de côté d'une première articulation mécanique 12 de type butée lamifiée, comportant un corps principal 12a comportant un creux ou un passage vide central, une butée lamifiée 12b et une tubulure interne 12c raccordée, sur sa partie droite à l'extrémité la de la conduite centrale d'export 1, et sur sa partie gauche à la première conduite flexible 11. Le corps principal 12a reçoit, sur sa surface externe, l'extrémité du lien de tensionnement et d'amarrage 13 et supporte la chaîne lourde 14.

La figure 5 est une coupe en vue de côté d'une seconde articulation mécanique 15 de type butée lamifiée, comportant un corps principal 15a, une butée laminée 15b et une tubulure interne 15c raccordée, sur sa partie gauche à l'autre extrémité 1b de la conduite centrale d'export, et sur sa partie droite à la deuxième conduite flexible 16. Le corps principal 15a reçoit l'extrémité du câble de tensionnement et d'ancrage 18 et est suspendu au flotteur 17, non représenté, par un câble 17a.

Les articulations 12, 15 sont initialement installées sur la conduite rigide centrale d'export 1 lors de sa fabrication à bord du navire de pose 22, par soudage direct des tubulures 12c, 15c aux extrémités de ladite conduite rigide centrale. La seconde extrémité desdites tubulures 12c, 15c étant équipée de brides sur lesquelles on vient connecter les conduites flexibles de liaison avec le FPSO et la bouée de déchargement. La conduite centrale d'export est donc continue de bride à bride, et du fait desdites brides il est alors facile de remplacer les conduites flexibles d'extrémités, si besoin est, lors des opérations de maintenance de l'installation.

Les butées lamifiées 12b et 15b sont constituées d'empilements de couches d'élastomères et de tôles métalliques de préférence de forme sphérique autorisant des déformations, donc des variations angulaires de la tubulure 12c, 15c vis-à-vis du corps principal 12a, 15a. Ainsi, ladite tubulure peut se déplacer à l'intérieur d'un cône d'angle au sommet delta₂ par exemple ici sensiblement +/- 15°, tout en étant capable de transmettre des efforts de compression considérables, pouvant atteindre plusieurs dizaines, voire plusieurs centaines de tonnes, par l'intermédiaire de la butée lamifiée. Ce type de butée lamifiée, connu de l'homme de l'art, est fabriqué par la Société TECHLAM France et sa forme est avantageusement sensiblement sphérique, ce qui permet d'avoir un effet d'auto-centrage, conduisant à une meilleure répartition des contraintes au sein de ladite butée, évitant ainsi des risques de pincement des couches d'élastomère pouvant conduire à une dégradation des performances de l'articulation mécanique, voire à sa ruine.

La seconde articulation mécanique 15 présente une butée lamifiée 15b ainsi que des fonctionnalités d'articulation similaires à celles de la première articulation mécanique 12, mais sa forme diffère du fait des diverses forces à équilibrer, lesquelles sont radicalement différentes d'un côté à l'autre de ladite conduite d'export 1.

A titre d'exemple, le dispositif selon l'invention en position moyenne présente les caractéristiques suivantes :
- la distance entre le FPSO 2 et la bouée d'export 3 est de L1 = 2000 m,
- la profondeur d'eau est H₁=1400 m,
- la longueur développée de l'arche flottante de la conduite centrale d'export 1 est de 1700 m,
- la conduite rigide d'export 1 en acier a un diamètre interne de 478 mm et une épaisseur de 15 mm, elle est intégralement remplie d'un pétrole brut de densité 0.82.

Le lien de tensionnement 13 côté FPSO mesure 290 m, et il est relié à une chaîne lourde 14 de 200 tonnes au niveau de l'articulation mécanique flexible 12 située, en configuration statique, à une profondeur H₂ d'environ 230 m, et à une distance horizontale L2 = 200 m du dit FPSO.
- la première conduite flexible 11 entre le FPSO et la conduite centrale rigide 1 est de 320 m de longueur,
- l'articulation mécanique flexible 15 côté bouée de déchargement 3 est située à une profondeur H₃ = 235 m environ, et à une distance horizontale L₃ = 200 m de l'axe de ladite bouée de déchargement,
- un flotteur 17 de 85 tonnes de flottabilité stabilise la deuxième articulation 15,
- deux liens d'ancrage 18 de 1 850 m sont solidaires de l'articulation mécanique flexible 15, elles sont reliées à deux ancres à succion 20 positionnées de part et d'autre du plan vertical contenant FPSO et bouée d'export.

En agitation maximale, créée principalement par les mouvements extrêmes du FPSO, les angles α₁, α₂ des axes de la conduite à ses extrémités par rapport à l'horizontale n'excèdent pas +/- 15°, et l'arche de la conduite centrale rigide se déforme de telle manière que son sommet se déplace verticalement sur une distance d'environ 50 m vers le haut, lorsque le FPSO et la bouée de déchargement ont tendance à se rapprocher, de 50 m vers le bas lorsque le FPSO et la bouée de déchargement ont tendance à s'éloigner.

La conduite rigide d'export 1 en acier de diamètre interne 478 mm et de 15 mm d'épaisseur, intégralement remplie d'un pétrole brut de densité 0.82 présente un rayon de courbure minimal (Rm) en état quasi-statique de repos de l'ensemble, Rm = 2000m. La limite élastique de l'acier de la conduite est σ = 413MPa, ce qui correspond pour le diamètre externe de la conduite de 508 mm et pour une contrainte sous courbure seule limitée à 66% de la limite élastique, à un rayon de courbure minimal ultime Rmu ≅ 130 m. Ainsi, dans le dispositif selon l'invention, le rayon de courbure minimal Rm en état quasi-statique de repos de l'ensemble est sensiblement égal à 15.4 fois le Rmu, donc largement supérieur à 10 fois le Rmu.

Ainsi, dans le dispositif selon l'invention, lorsque le FPSO 2 s'écarte de la bouée de déchargement, la surlongueur nécessaire est fournie principalement par la variation de l'angle γ, ce qui correspond à une légère remontée vers la surface de l'articulation mécanique flexible 12 et une rotation du lien d'amarrage 13 autour de son point d'attache 2b sur le FPSO, dans le sens contraire des aiguilles d'une montre, comme représenté sur la figure 8. De même, du côté bouée de déchargement 3, l'angle β augmente, l'articulation mécanique flexible 15 s'enfonce légèrement en arc de cercle centré au point d'ancrage 20a du câble d'ancrage 20, et l'extrémité 1b de la conduite rigide en forme d'arche, connectée à la dite articulation mécanique flexible 15 s'enfonce alors légèrement, comme également représenté sur la figure 8. Les deux conduites flexibles 11 et 16 subissent alors des déformations importantes, mais ces dernières n'engendrent quasiment aucune réaction dans le système, donc aucune contrainte significative.

La résistance à la fatigue étant inversement proportionnelle à l'amplitude de variation de contrainte entre l'état de contrainte maximale et minimale, la conduite rigide selon l'invention présente ainsi une tenue en fatigue décuplée, voire plus, par rapport aux dispositifs de l'art antérieur illustrés sur les figures 1a-1d. En effet, dans les systèmes conventionnels, les mouvements d'écartement et de rapprochement du FPSO et de la bouée sont absorbés uniquement par déformation de la conduite rigide formant trois arches dans les configurations 1a, 1b, 1c, et une seule arche dans le cas de la configuration 1d. Ces déformations restent importantes et les rayons de courbures varient sur une large plage dans les zones 7a, induisant de ce fait des variations de contraintes importantes entre les valeurs minimale et maximale, réduisant de ce fait radicalement la tenue en fatigue de la conduite rigide d'export.

Ainsi l'arche de la conduite d'export selon l'invention permet d'atteindre une durée de vie théorique en fatigue de l'ordre de 10 000 années pour des qualités de soudure standard dans le domaine de l'offshore, ce qui peut être considéré comme une durée de vie quasi-infinie, alors que les durées de vie théoriques en fatigue des systèmes conventionnels conduisent à des valeurs de 300 à 500 ans, ce qui ne donne, pour ces systèmes selon l'art antérieur, qu'un facteur 10 à 15 de sûreté de fonctionnement par rapport à l'objectif de durée de vie effective des installations qui est de 25-30 ans voire plus. Ce facteur de 10 à 15 est actuellement couramment considéré par les opérateurs pétroliers comme insuffisant pour qualifier la sûreté de fonctionnement de leur installation. Le dispositif selon l'invention permet d'augmenter radicalement ce facteur de sécurité dans des proportions de 20 à 30 fois, tout en restant dans la mise en oeuvre de technologies éprouvées, et des coûts de préfabrication et d'installation réduits.

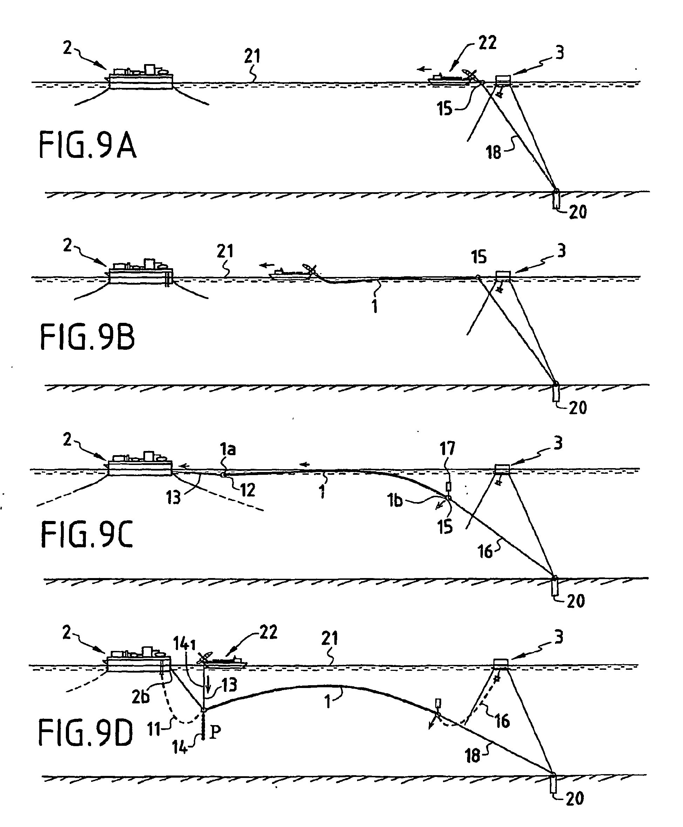

Les figures 9a-9d illustrent les diverses phases de l'installation du dispositif de transfert selon l'invention qui comprend les étapes successives suivantes :
- on installe l'ancré à succion 20 ainsi qu'un premier lien de tensionnement ou câble d'ancrage 18 qui remonte en surface (figure 9a) ;
- le navire de pose 22 équipé d'une tour de pose en J accroche la première extrémité 1b de la conduite rigide centrale 1 à l'extrémité du câble d'ancrage 18 par l'intermédiaire d'une première articulation flexible 15, ladite extrémité 1b de conduite étant déjà connectée à la tubulure 15c de l'articulation mécanique flexible 15, laquelle est donc connectée au corps principal 15a à l'extrémité du câble d'ancrage 18 (figure 9b) ;
- l'intégralité de la conduite rigide 1 est assemblée par tronçons successifs d'éléments unitaires de 50 m de long, les éléments de flottabilité et d'isolation thermique (non représenté) sont installés simultanément autour de la conduite, laquelle flotte alors en surface 21 ;
- la seconde extrémité 1a de la conduite rigide 1 est équipée d'une seconde articulation mécanique flexible 12, et un second lien de tensionnement ou câble d'amarrage 13 est connecté à la dite seconde articulation mécanique flexible 12, et la seconde extrémité dudit câble d'amarrage 13 est reliée au câble d'un treuil (non représenté) situé à bord du FPSO (figure 9c) ;
- un flotteur 17 est connecté à la première articulation mécanique flexible 15, flottant proche de la surface de l'eau ; ladite seconde extrémité dudit câble d'amarrage 13 est alors tirée par ledit treuil vers le FPSO et connectée audit FPSO en 2b ;
- la chaîne lourde 14 est alors mise en place à la dite seconde articulation flexible 12 à l'aide d'un câble 14a dérivé depuis le navire de pose 22 (figure 9d), puis
- les deux conduites flexibles 11 et 16 sont installées aux extrémités respectives 1a, 1b de la conduite rigide centrale 1 pour obtenir la configuration finale moyenne de la figure 2.

Dans une variante de réalisation, on met en oeuvre deux conduites rigides en forme d'arche 1 installées en parallèle, chacune d'elle possédant alors des pièces d'articulation mécanique flexibles 12 et 15 aux extrémités, les dites articulations 12, côté FPSO, étant de préférence indépendantes l'une de l'autre, c'est-à-dite que chacune des conduites rigides 1 est reliée à un lien d'amarrage 13 propre et une chaîne lourde propre 14. Et, côté bouée de déchargement 3, les pièces d'articulation mécanique 15 sont de préférence reliées à un même lien d'ancrage 18 et le cas échéant à un même flotteur 17.

Cette configuration permet d'économiser une ancre à succion (30 tonnes) et un lien d'ancrage (1500 à 2000 m selon la profondeur d'eau) supplémentaires, qui n'auront alors pas à être installés au fond de la mer.

Cette disposition à "lignes parallèles" présente l'avantage de pouvoir purger les lignes entre deux chargements pour éviter que le brut paraffinique ne fige dans les conduites par refroidissement de l'ensemble. Pour effectuer ladite purge, on pompe avantageusement, depuis le FPSO, du gazole dans la première conduite et par un jeu de vannes situées au niveau de la bouée de déchargement, on fait revenir le fluide vers le FPSO par la seconde conduite. Une fois la purge réalisée, la ligne est en sécurité, en attente du prochain chargement, où la ligne sera alors purgée avec du pétrole brut, le gazole étant récupéré pour le cycle suivant, les deux conduites sont alors remises en fonctionnement parallèle pour exporter le pétrole brut à débit maximum vers le pétrolier enleveur.

## Revendications

1. Dispositif de transfert de fluide entre deux supports flottants (2, 3) ancrés au fond de la mer (5) comportant une conduite sous-marine rigide centrale (1) installée en subsurface, dont les extrémités (1a, 1b) sont reliables chacune respectivement à un des deux dits supports par l'intermédiaire d'une conduite flexible (11,16), dans lequel:
a) la partie courante de ladite conduite rigide centrale (1) comprend ou coopère avec des éléments de flottabilité (8) de sorte que la dite conduite rigide centrale (1) adopte en état quasi-statique de repos une configuration en forme d'arche courbe, et
b) les dites conduites flexibles (11, 16) ont des longueurs et courbures, de sorte que les variations de courbure des dites conduites flexibles sont aptes à compenser les mouvements des supports flottants, et.
c) ladite conduite rigide est reliable à chaque extrémité par un lien de tensionnement, (13, 18), soit à un des deux dits supports flottants (2,3), soit au fond de la mer, **caractérisé en ce que** lesdits liens de tensionnement (13,18) sont reliés à ladite conduite rigide (1) respectivement:
■ à une première extrémité (1a), à un dit support flottant (2, 3), ladite première extrémité (1a) comprenant ou coopérant avec des moyens de lestage (14), et
■ à sa seconde extrémité (1b), au fond de la mer, ladite seconde extrémité (1b) comprenant ou coopérant avec des moyens de flottabilité additionnels (17).

2. Dispositif de transfert selon la revendication 1, **caractérisé en ce que** ladite conduite rigide centrale (1) adopte en état quasi statique de repos une configuration en forme d'arche courbe selon une courbe sensiblement en forme de chaînette telle que les angles (α₁, α₂) entre les demi-droites des axes (XX', YY') de la dite conduite rigide et les demi-droites horizontales à chacune de ses extrémités (1a, 1b) en direction de l'autre extrémité (1b, 1a), sont en valeur absolue inférieurs à 20°, de préférence inférieurs à 15°.

3. Dispositif selon la revendication 1 ou 2, **caractérisé en ce que** ladite première extrémité (1a) de ladite conduite rigide est reliée au support flottant (2) le plus stable des deux dits supports flottants.

4. Dispositif selon l'une des revendications 1 à 3, **caractérisé en ce que** les deux dits supports flottants sont constitués respectivement par un support flottant de type FPSO (2) et une bouée de déchargement (3).

5. Dispositif selon l'une des revendications 1 à 3, **caractérisé en ce que** ladite conduite rigide est reliée à sa dite première extrémité à un dit support flottant de type FPSO (2).

6. Dispositif selon l'une des revendications 1 à 5, **caractérisé en ce que** les dits liens de tensionnement (13, 18) forment avec les axes (XX',YY') de la dite conduite rigide à ses extrémités (1a, 1b) des angles (β, γ), aptes à varier et déplacer verticalement les extrémités (1a, 1b) de la dite conduite rigide, lorsque les dits supports flottants sont en mouvement et que la distance entre eux varie, les dits angles présentant des valeurs lorsque le dispositif est en état quasi-statique de repos, inférieures à 150°, de préférence inférieures à 100.

7. Dispositif selon l'une des revendications 1 à 6, **caractérisé en ce que**
- lesdits moyens de lestage (14) sont constitués par une chaîne lourde suspendue au niveau de ladite première extrémité, et
- lesdits moyens de flottabilité (17) sont constitués par une bouée à laquelle ladite seconde extrémité est suspendue.

8. Dispositif selon l'une des revendications 1 à 7, **caractérisé en ce que** les dites conduites flexibles (11, 16) sont reliées aux extrémités de la dite conduite rigide centrale par des articulations mécaniques flexibles (12, 15) comprenant :
- une tubulure rigide (12c, 15c) reliée à ses extrémités aux extrémités respectives des dites conduite rigide (1) et conduite flexible (11, 16), et
- un corps principal (12a, 15a) constituant une pièce forgée définissant
. une surface externe sur laquelle sont accrochés les dits liens de tensionnement (13, 18) et, le cas échéant, des dits moyens de lestage (14) ou dits moyens de flottabilité (17, 16a-17a), et
. une surface interne délimitant un passage vide traversé par la dite tubulure et,
- la dite surface interne du corps principal et la dite tubulure supportant une butée lamifiée (12b,15b) comprenant des couches d'élastomère d'axe de révolution (XX',YY') de préférence de type sphérique, assurant la liaison mécanique flexible entre le dit corps principal et la dite tubulure, de manière à autoriser des mouvements angulaires de la dite tubulure par rapport au corps principal s'inscrivant dans un cône d'angle au sommet situé sensiblement sur ledit axe de révolution (XX',YY') de la dite butée lamifiée, d'un angle au sommet δ de valeur maximale 15°.

9. Dispositif selon l'une des revendications 1 à 8, **caractérisé en ce que** la conduite flexible (16) assurant la liaison entre la conduite rigide (1) et le dit support flottant (2, 3), de préférence la conduite flexible (16) assurant la liaison avec un support flottant (3) relié au fond de la mer par un dit lien de tensionnement (18), de préférence encore une bouée de déchargement (3), présente une configuration en S.

10. Dispositif selon la revendication 9, **caractérisé en ce que** la tubulure assurant la liaison entre l'extrémité de la conduite rigide centrale et la dite conduite flexible (16) présente une extrémité (15d) courbée vers le haut du côté de la liaison flexible.

11. Dispositif selon l'une des revendications 1 à 10, **caractérisé en ce que** la dite conduite rigide (1) comprend des éléments de flottabilité (8) constitués par une mousse d'isolation thermique répartie tout le long et tout autour de la dite conduite, de préférence de manière sensiblement uniforme et continue pour assurer ainsi à la fois isolation thermique et flottabilité de la dite conduite rigide.

12. Dispositif selon l'une des revendications 1 à 11, **caractérisé en ce que** la dite conduite rigide (1) présente une courbure convexe vue depuis la surface (21) de la mer.

13. Dispositif selon l'une des revendications 1 à 11, **caractérisé en ce que** la dite conduite rigide (1) présente une courbure concave vue depuis la surface (21) de la mer.

14. Dispositif selon l'une des revendications 1 à 13, **caractérisé en ce que** l'angle (α₁, α₂) entre l'axe de la dite conduite rigide à ses extrémités et l'horizontale est maintenu en valeur absolue entre 2 et 20°, de préférence 5 à 15°.

15. Dispositif selon l'une des revendications 1 à 14, **caractérisé en ce que** le rayon de courbure minimum de la dite conduite rigide centrale en forme de courbe de chaînette est de 750 m, de préférence 1500 m.

16. Dispositif selon la revendication 8, **caractérisé en ce qu'**il comporte deux telles conduites rigides en forme d'arche (1) installées en parallèle.

17. Procédé d'installation en mer d'un dispositif selon l'une des revendications 1 à 15, depuis un navire de pose (22) en surface, **caractérisé en ce qu'**il comprend les étapes successives suivantes :
1) on accroche au fond de la mer ou le cas échéant sur un premier support flottant, de préférence une bouée de déchargement (3), un dit lien de tensionnement (18),
2) on assemble et pose en mer la conduite rigide centrale (1) par assemblage d'éléments unitaires de conduites comprenant ou coopérant avec des dits éléments de flottabilité (8), le premier élément unitaire de conduite ayant été accroché à l'extrémité du dit lien de tensionnement (18),
3) on accroche un autre dit lien de tensionnement (13) à l'extrémité (1b) du dernier élément de conduite, puis à un second support flottant (2) ou au fond de la mer, le cas échéant,
4) on installe les dits moyens de lestage (14) et moyens de flottabilité (17) aux extrémités (1a, 1b) de la conduite rigide, puis
5) on installe les dites conduites flexibles (11, 16) entre les supports flottants (2, 3) et lesdites première et seconde extrémités (1a, 1b) de la conduite rigide.

18. Procédé selon la revendication 17, **caractérisé en ce que** :
- à l'étape 1), on accroche ledit lien de tensionnement (18) au fond de la mer du côté dudit support flottant le moins stable, de préférence une bouée de déchargement (3) et
- à l'étape 3), on accroche ledit autre lien de tensionnement (13) à un dit support flottant le plus stable, de préférence du type FPSO (2).

## Claims

1. A device for transferring fluid between two floating supports (2, 3) anchored to the sea bottom (5), the device comprising a rigid central undersea pipe (1) installed below the surface, with its ends (1a, 1b) connectable to respective ones of said two supports via respective flexible hoses (11, 16), wherein:
a) the main portion of said rigid central pipe (1) includes or co-operates with buoyancy elements (8) such that in a quasi-static rest state, said rigid central pipe (1) adopts a configuration that is in the form of a curved arch; and
b) said flexible hoses (11, 16) are of lengths and curvatures such that the variations in the curvatures of said flexible hoses are suitable for compensating the movements of the floating supports; and
c) said rigid pipe is connectable at each end by a tensioning link (13, 18) either to one of said two floating supports (2, 3) or to the sea bottom, **characterized in that** said tensioning links (13, 18) are connected to the rigid pipe (1)respectively:
. at a first end (1a) to a said floating support (2, 3), said first end (1a) including or co-operating with ballasting means (14); and
. at its second end (1b) to the sea bottom, said second end including or co-operating with additional buoyancy means (17).

2. A transfer device according to claim 1, **characterized in that**, in a quasi-static rest state, said rigid central pipe (1) adopts a configuration in the form of a curved arch with a curve that is substantially catenary-shaped such that the angles (α₁, α₂) between the half-lines of the axes (XX', YY') of said rigid pipe and the horizontal half-lines at each of its ends (1a, 1b) extending towards the other end (1b 1a) present absolute values of less than 20°, preferably of less than 15°.

3. A device according to claim 1 or claim 2, **characterized in that** said first end (1a) of said rigid pipe is connected to the more stable floating support (2) of said two floating supports.

4. A device according to any one of claims 1 to 3, **characterized in that** said two floating supports are constituted respectively by a floating support of the FPSO type (2) and by an offloading buoy (3).

5. A device according to any one of claims 1 to 3, **characterized in that** said rigid pipe is connected at its said first end to a said floating support of the FPSO type (2).

6. A device according to any one of claims 1 to 5, **characterized in that** said tensioning links (13, 18) form angles (β, γ) relative to the axes (XX', YY') of said rigid pipe at its ends (1a, 1b), which angles are suitable for varying and moving the ends (1a, 1b) of said rigid pipe vertically when said floating supports move and the distance between them varies, said angles presenting values when the device is in a quasi-static rest state that are less than 150°, and preferably less than 100°.

7. A device according to any one of claims 1 to 6, **characterized in that**:
. said ballasting means (14) are constituted by a heavy chain suspended at said first end; and
. said buoyancy means (17) are constituted by a buoy from which said second end is suspended.

8. A device according to any one of claims 1 to 7, **characterized in that** said flexible hoses (11, 16) are connected to the ends of said rigid central pipe via flexible mechanical joints (12, 15) each comprising:
a rigid tube (12c, 15c) connected at its ends to a respective end of said rigid pipe (1) and to a said flexible hose (11, 16); and
· a main body (12a, 15a) constituting a forging defining:
· an outside surface to which said tensioning links (13, 18) are connected and, where appropriate, said ballasting means (14) or said buoyancy means (17, 16a-17a); and
· an inside surface defining an empty passage through which said tube passes; and
· said inside surface of the main body and said tube supporting a laminated abutment (12b, 15b) of preferably spherical type, comprising layers of elastomer that are circularly symmetrical about a respective axis (XX', YY'), providing a flexible mechanical connection between said main body and said tube, so as to allow said tube to move angularly relative to the main body within a cone having an angle at the apex lying substantially on said axis of symmetry (XX', YY') of said laminated abutment and presenting a maximum value δ equal to 15°.

9. A device according to any one of claims 1 to 8, **characterized in that** the flexible hose (16) providing the connection between the rigid pipe (1) and said floating support (2, 3), preferably the flexible hose (16) providing the connection with a floating support (2) connected to the sea bottom by a said tensioning link (18), more preferably an offloading buoy (3), presents an S-shaped configuration.

10. A device according to claim 9, **characterized in that** the tube providing the connection between the end of the rigid central pipe and said flexible hose (16) presents an upwardly-curved end (15d) beside the flexible connection.

11. A device according to any one of claims 1 to 10, **characterized in that** said rigid pipe (1) includes buoyancy elements (8) constituted by a thermally-insulating foam distributed all along and all around said pipe, preferably in substantially uniform and continuous manner so as to provide both thermal insulation and buoyancy for said rigid pipe.

12. A device according to any one of claims 1 to 11, **characterized in that** said rigid pipe (1) presents curvature that is convex towards the surface (21) of the sea.

13. A device according to any one of claims 1 to 11, **characterized in that** said rigid pipe (1) presents curvature that is concave towards the surface (21) of the sea.

14. A device according to any one of claims 1 to 13, **characterized in that** the angles (α₁, α₂) between the axes of said rigid pipe at its ends, and the horizontal, are maintained at an absolute value lying in the range 2° to 20°, preferably lying in the range 5° to 15°.

15. A device according to any one of claims 1 to 14, **characterized in that** the minimum radius of curvature of said rigid central pipe in the form of a catenary curve is 750 m, and preferably 1500 m.

16. A device according to claim 8, **characterized in that** it comprises two said rigid pipes in the form of arches (1), installed in parallel.

17. A method of installing a device according to any one of claims 1 to 15 at sea, from a laying ship (22) on the surface, the method being **characterized in that** it comprises the following successive steps:
1) connecting a said tensioning link (18) to the sea bottom, or where appropriate to a first floating support, preferably an offloading buoy (3);
2) assembling and laying the rigid central pipe (1) by assembling together unit pipe elements that include or co-operate with said buoyancy elements (8), the first unit pipe element being fastened to the end of a said tensioning link (18);
3) fastening another said tensioning link (13) to the end (1b) of the last pipe element, and then to a second floating support (2) or to the sea bottom, where appropriate;
4) installing said ballasting means (14) and said buoyancy means (17) at the ends (1a, 1b) of the rigid pipe; and then
5) installing said flexible hoses (11, 16) between the floating supports (2, 3) and said first and second ends (1a, 1b) of the rigid pipe.

18. A method according to claim 17, **characterized in that**:
· in step 1), said tensioning link (18) is connected to the sea bottom beside said less stable floating support, preferably an offloading buoy (3); and
· in step 3), said other tensioning link (13) is fastened to a said more stable floating support, preferably of the FPSO type (2).

## Patentansprüche

1. Vorrichtung für den Fluidtransfer zwischen zwei am Meeresgrund (5) verankerten schwimmenden Trägern (2, 3), umfassend eine starre mittlere, oberflächennah verlegte Unterwasserleitung (1), deren Enden (1a, 1 b) jeweils mittels einer Schlauchleitung (11, 16) mit jeweils einem der beiden Träger verbindbar sind, wobei:
a) der durchgehende Teil der starren mittleren Leitung (1) Auftriebselemente (8) umfaßt oder damit zusammenwirkt, so daß die starre mittlere Leitung (1) im quasi-statischen Ruhezustand eine Gestalt in Form eines gekrümmten Bogens annimmt, und
b) die Schlauchleitungen (11, 16) Längen und Krümmungen aufweisen, so daß die Krümmungsänderungen der Schlauchleitungen geeignet sind, die Bewegungen der schwimmenden Träger auszugleichen, und
c) die starre Leitung an jedem Ende über ein Spannbindeglied (13, 18) entweder mit einem der beiden schwimmenden Träger (2, 3) oder mit dem Meeresgrund verbindbar ist,
**dadurch gekennzeichnet, daß** die Spannbindeglieder (13, 18) an der starren Leitung (1) verbunden sind:
- an einem ersten Ende (1a), mit einem schwimmenden Träger (2, 3), wobei das erste Ende (1a) Ballastmittel (14) umfaßt oder damit zusammenwirkt, bzw.
- an ihrem zweiten Ende (1 b), mit dem Meeresgrund, wobei das zweite Ende (1b) zusätzliche Auftriebsmittel (17) umfaßt oder damit zusammenwirkt.

2. Transfervorrichtung nach Anspruch 1, **dadurch gekennzeichnet, daß** die starre mittlere Leitung (1) im quasi-statischen Ruhezustand eine Gestalt in Form eines gekrümmten Bogens entlang einer im wesentlichen kettenförmigen Kurve annimmt, welche derart ist, daß die Winkel (α₁, α₂) zwischen den Halbgeraden der Achsen (XX', YY') der starren Leitung und den horizontalen Halbgeraden an jedem ihrer Enden (1a, 1 b) in Richtung des anderen Endes (1b, 1a) im Absolutwert kleiner als 20°, vorzugsweise kleiner als 15° sind.

3. Vorrichtung nach Anspruch 1 oder 2, **dadurch gekennzeichnet, daß** das erste Ende (1a) der starren Leitung mit dem stabilsten schwimmenden Träger (2) der beiden schwimmenden Träger verbunden ist.

4. Vorrichtung nach einem der Ansprüche 1 bis 3, **dadurch gekennzeichnet, daß** die beiden schwimmenden Träger von einem schwimmenden Träger vom Typ FPSO (2) bzw. von einer Verladeboje (3) gebildet sind.

5. Vorrichtung nach einem der Ansprüche 1 bis 3, **dadurch gekennzeichnet, daß** die starre Leitung an ihrem ersten Ende mit einem schwimmenden Träger vom Typ FPSO (2) verbunden ist.

6. Vorrichtung nach einem der Ansprüche 1 bis 5, **dadurch gekennzeichnet, daß** die Spannbindeglieder (13, 18) mit den Achsen (XX', YY') der starren Leitung an ihren Enden (1 a, 1b) Winkel (β, γ) bilden, die geeignet sind, die Enden (1 a, 1b) der starren Leitung zu verändern und vertikal zu bewegen, wenn die schwimmenden Träger in Bewegung sind, und daß der Abstand zwischen ihnen variiert, wobei die Winkel - wenn die Vorrichtung sich im quasi-statischen Ruhezustand befindet - Werte von unter 150°, vorzugsweise von unter 100 aufweisen.

7. Vorrichtung nach einem der Ansprüche 1 bis 6, **dadurch gekennzeichnet, daß**
- die Ballastmittel (14) von einer im Bereich des ersten Endes aufgehängten schweren Kette gebildet sind und
- die Auftriebsmittel (17) von einer Boje, an der das zweite Ende aufgehängt ist, gebildet sind.

8. Vorrichtung nach einem der Ansprüche 1 bis 7, **dadurch gekennzeichnet, daß** die Schlauchleitungen (11, 16) mit den Enden der starren mittleren Leitung durch flexible mechanische Gelenke (12, 15) verbunden sind, die umfassen:
- einen starren Stutzen (12c, 15c), der an seinen Enden mit den jeweiligen Enden der starren Leitung (1) und der Schlauchleitung (11, 16) verbunden ist, sowie
- einen Hauptkörper (12a, 15a), der ein Schmiedeteil bildet, das definiert
- eine Außenseite, an der die Spannbindeglieder (13, 18) und gegebenenfalls Ballastmittel (14) oder Auftriebsmittel (17, 16a-17a) eingehakt sind, und
- eine Innenseite, die einen von dem Stutzen durchgriffenen hohlen Durchgang begrenzt,
- wobei die Innenseite des Hauptkörpers und der Stutzen einen vorzugsweise kugelartigen geschichteten Anschlag (12b, 15b) mit Elastomerschichten, mit einer Rotationsachse (XX', YY') tragen, der die flexible mechanische Verbindung zwischen dem Hauptkörper und dem Stutzen sicherstellt, um Winkelbewegungen des Stutzens gegenüber dem Hauptkörper innerhalb eines Kegels mit Spitzenwinkel, der im wesentlichen auf der Rotationsachse (XX', YY') des geschichteten Anschlags liegt, um einen Spitzenwinkel δ mit einem Maximalwert von 15° zuzulassen.

9. Vorrichtung nach einem der Ansprüche 1 bis 8, **dadurch gekennzeichnet, daß** die Schlauchleitung (16), welche die Verbindung zwischen der starren Leitung (1) und dem schwimmenden Träger (2, 3) sicherstellt, vorzugsweise die Schlauchleitung (16), welche die Verbindung mit einem schwimmenden Träger (3), der über ein Spannbindeglied (18) mit dem Meeresgrund verbunden ist, weiterhin vorzugsweise einer Verladeboje (3) sicherstellt, eine S-förmige Gestalt aufweist.

10. Vorrichtung nach Anspruch 9, **dadurch gekennzeichnet, daß** der Stutzen, der die Verbindung zwischen dem Ende der starren mittleren Leitung und der Schlauchleitung (16) sicherstellt, auf der Seite der flexiblen Verbindung ein nach oben gebogenes Ende (15d) aufweist.

11. Vorrichtung nach einem der Ansprüche 1 bis 10, **dadurch gekennzeichnet, daß** die starre Leitung (1) Auftriebselemente (8) umfaßt, die von einem Wärmeisolierschaum gebildet sind, der entlang der und um die Leitung herum verteilt ist, vorzugsweise im wesentlichen gleichmäßig und kontinuierlich, um auf diese Weise sowohl die Wärmeisolierung als auch die Schwimmfähigkeit der starren Leitung sicherzustellen.

12. Vorrichtung nach einem der Ansprüche 1 bis 11, **dadurch gekennzeichnet, daß** die starre Leitung (1) von der Meeresoberfläche (21) aus gesehen eine konvexe Krümmung aufweist.

13. Vorrichtung nach einem der Ansprüche 1 bis 11, **dadurch gekennzeichnet, daß** die starre Leitung (1) von der Meeresoberfläche (21) aus gesehen eine konkave Krümmung aufweist.

14. Vorrichtung nach einem der Ansprüche 1 bis 13, **dadurch gekennzeichnet, daß** der Winkel (α₁, α₂) zwischen der Achse der starren Leitung an ihren Enden und der Horizontalen im Absolutwert zwischen 2 und 20°, vorzugsweise 5 und 15° gehalten ist.

15. Vorrichtung nach einem der Ansprüche 1 bis 14, **dadurch gekennzeichnet, daß** der minimale Krümmungsradius der starren mittleren, kettenkurvenförmigen Leitung 750 m, vorzugsweise 1500 m beträgt.

16. Vorrichtung nach Anspruch 8, **dadurch gekennzeichnet, daß** sie zwei solch bogenförmige starre Leitungen (1) umfaßt, die parallel zueinander angeordnet sind.

17. Verfahren zum Installieren einer Vorrichtung nach einem der Ansprüche 1 bis 15, von einem an der Oberfläche befindlichen Verlegeschiff (22) aus im Meer, **dadurch gekennzeichnet, daß** es die folgenden aufeinanderfolgenden Schritte umfaßt:
1) am Meeresgrund oder gegebenenfalls an einem ersten schwimmenden Träger, vorzugsweise einer Verladeboje (3), wird ein Spannbindeglied (18) festgehakt,
2) die starre mittlere Leitung (1) wird durch Verbinden von Leitungseinzelelementen, die Auftriebselemente (8) umfassen oder damit zusammenwirken, zusammengesetzt und im Meer verlegt, wobei das erste Leitungseinzelelement am Ende des Spannbindegliedes (18) eingehakt worden ist,
3) ein weiteres Spannbindeglied (13) wird am Ende (1 b) des letzten Leitungselements, dann an einem zweiten schwimmenden Träger (2) oder gegebenenfalls am Meeresgrund festgehakt,
4) die Ballastmittel (14) und die Auftriebsmittel (17) werden an den Enden (1a, 1b) der starren Leitung angebracht, anschließend
5) werden die Schlauchleitungen (11, 16) zwischen den schwimmenden Trägern (2, 3) und dem ersten und dem zweiten Ende (1 a, 1 b) der starren Leitung angebracht.

18. Verfahren nach Anspruch 17, **dadurch gekennzeichnet, daß**:
- bei Schritt 1) das Spannbindeglied (18) am Meeresgrund auf der Seite des am wenigsten stabilen schwimmenden Trägers, vorzugsweise einer Verladeboje (3) festgehakt wird und
- bei Schritt 3) das weitere Spannbindeglied (13) an dem stabilsten schwimmenden Träger, vorzugsweise vom Typ FPSO (2) festgehakt wird.
